# EUROPEAN PATENT APPLICATION

(11) **EP 4 306 436 A1**
(43) Date of publication of application: **17.01.2024**
(21) Application number: 23177903.4
(22) Date of filing: 07.06.2023
(51) Int. Cl.: B65B 7/20, B65B 59/00, B65B 7/16

(54) **CASE-HANDLING SYSTEM WITH FLAP-SUPPRESSING AND FLAP-CLOSING DEVICES**

(30) Priority: 07.06.2022 US 202263349790 P
(71) Applicant: Signode Industrial Group LLC, Tampa, FL 33637 (US)
(72) Inventor: JARRELL, Diana, Streamwood, IL 60107 (US); PATEL, Joel, Hawthorn Woods, IL 60047 (US); FELSECKER, Douglas, Saint Charles, IL 60175 (US)
(74) Representative: Bardehle Pagenberg Partnerschaft mbB Patentanwälte Rechtsanwälte

(57) **Abstract**

Various embodiments provide a case-handling system including a passive minor-flap-suppressing device and a passive major flap-closing device.

## Description

### Field

The present disclosure relates to case-handling systems, and more particularly to case-handling systems with flap-suppressing and/or flap-closing devices.

### Background

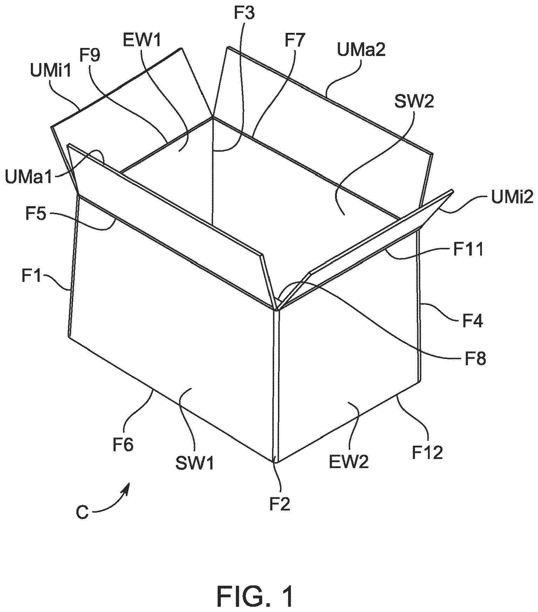

Every day, companies around the world pack millions of items in cases (such as cases formed from corrugated) to prepare them for shipping. Figure 1 shows an example prior art case C. The case C includes a first major side wall SW1, a second major side wall SW2, a first minor side wall EW1, a second minor side wall EW2, a first upper major flap UMa1, a second upper major flap UMa2, a first upper minor flap UMi1, a second upper minor flap UMi2, a first lower major flap LMa1 (numbered for ease of reference but not shown), a second lower major flap LMa2 (numbered for ease of reference but not shown), a first lower minor flap LMi1 (numbered for ease of reference but not shown), and a second lower minor flap LMi2 (numbered for ease of reference but not shown).

The first and second minor side walls EW1 and EW2 are integrally connected to opposing side edges, respectfully, of the first major side wall SW1 and are separated from the first major side wall SW1 via vertical fold lines (such as creases or scores) F1 and F2, respectively. The first and second minor side walls EW1 and EW2 are also integrally connected to opposing side edges, respectfully, of the second major side wall SW2 and are separated from the second major side wall SW2 via vertical fold lines F3 and F4, respectively. Accordingly, the first and second minor side walls EW1 and EW2 and the first and second major side walls SW1 and SW2 are all integrally connected.

The first upper and lower major flaps UMa1 and LMa1 are integrally connected to the upper and lower edges, respectfully, of the first major side wall SW1 and separated from the first major side wall SW1 via horizontal fold lines F5 and F6, respectively. The second upper and lower major flaps UMa2 and LMa2 are integrally connected to the upper and lower edges, respectfully, of the second major side wall SW2 and separated from the second major side wall SW2 via horizontal fold lines F7 and F8, respectively. The first upper and lower minor flaps UMi1 and LMi1 are integrally connected to the upper and lower edges, respectfully, of the first minor side wall EW1 and separated from the first minor side wall EW1 via horizontal fold lines F9 and F10 (numbered for ease of reference but not shown), respectively. The second upper and lower minor flaps UMi2 and LMi2 are integrally connected to the upper and lower edges, respectfully, of the second minor side wall EW2 and separated from the second minor side wall EW2 via horizontal fold lines F11 and F12, respectively.

Figure 1 shows the case C in an open configuration in which the major and minor side walls are generally perpendicular to one another, the lower major and minor flaps are closed, and the upper major and minor flaps are open. More specifically, the lower minor flaps LMi1 and LMi2 are folded along the fold lines F10 and F12, respectively, such that they extend into the cavity formed by the major and minor side walls SW1, SW2, EW1, and EW2 and are generally perpendicular to the major and minor side walls, and the lower major flaps LMa1 and LMa2 are folded along the fold lines F6 and F8, respectively, such that they cover the lower minor flaps LMi1 and LMi2 and are generally perpendicular to the major and minor side walls. Since the upper major and minor flaps are open, the upper end of case C is open and ready to receive items (and if necessary, dunnage) before the upper major and minor flaps are closed (i.e., folded and taped shut).

To close the top of the case after product (and, if needed, dunnage) is loaded in the case C, first, the upper minor flaps UMi1 and UMi2 are folded inwardly (i.e., toward one another) along their respective fold lines F9 and F11 and then the upper major flaps UMa1 and UMa2 are folded inwardly (i.e., toward one another) along their respective fold lines F5 and F7. After being closed, the upper major flaps UMa1 and UMa2 are sealed via pressure-sensitive tape or another suitable closing mechanism.

The case C has a height extending from the outer surface(s) of the lower major flaps LMa1 and LMa2 (when closed) to the outer surfaces of the upper major flaps UMa1 and UMa2 (when closed), a width extending from the outer surface of the first side wall SW1 to the outer surface of the second side wall SW2, and a length extending from the outer surface of the first end wall EW1 to the outer surface of the second end wall EW2.

### Summary

Various embodiments of the present disclosure provide a case-handling system that may include a passive minor-flap-suppressing device sized, shaped, oriented, and/or otherwise configured to maintain the upper minor flaps of a case in closed positions and/or a passive major-flap-closing device sized, shaped, oriented, and/or otherwise configured to close the upper major flaps of the case as the case moves past the major-flap-closing device.

Various embodiments of the present disclosure provide a case-handling system including a conveyor, a vertically movable longitudinally extending first flap-suppressor, and a controller configured to cause the first flap-suppressor to vertically move to a first position to engage and hold upper minor flaps of a case in closed positions as the conveyor moves the case under the first flap-suppressor, wherein the first position, in some examples, is determined by the controller based on a height of the case.

### Brief Description of the Figures

Figure 1 is a top perspective view of a prior art case having open upper major and minor flaps and closed lower major and minor flaps.
Figure 2 is a side view of part of an example case-handling system of the present disclosure including a minor-flap-closing device, a minor-flap-suppressing device, and a major-flap-closing device.
Figure 3 is a front perspective view of the minor-flap-suppressing device and the major-flap-closing device of Figure 2.
Figure 4 is a rear perspective view of the minor-flap-suppressing device and the major-flap-closing device of Figure 2.
Figure 5 is a front perspective view of the minor-flap-suppressing device and the major-flap-closing device of Figure 2 showing the minor-flap-suppressing device engaging the closed upper minor flaps of a case to maintain those flaps in closed positions.
Figure 6 is a rear perspective view of the minor-flap-suppressing device and the major-flap-closing device of Figure 2 showing the minor-flap-suppressing device engaging the closed upper minor flaps of a case to maintain those flaps in closed positions.
Figure 7 is a rear perspective view of the minor-flap-suppressing device and the major-flap-closing device of Figure 2 showing the minor-flap-suppressing device still engaging the closed upper minor flaps of a case while the major-flap-closing device closes the upper major flaps of the case.
Figure 7A is a front perspective view of the minor-flap-suppressing device and the major-flap-closing device of Figure 2 showing a case after the minor-flap-suppressing device has stopped engaging the closed upper minor flaps of the case and after the major-flap-closing device closes the upper major flaps of the case.
Figure 7B is a front of the major-flap-closing device of Figure 2 at engaging the upper minor flaps of the case such that the upper major flaps of the case are partially closed.
Figure 7C is a front perspective view of the minor-flap-suppressing device and the major-flap-closing device of Figure 2 engaging a case as the major-flap-closing device closes the upper major flaps of the case.
Figure 8 is a top front perspective view of a flap closer of the major-flap-closing device of Figure 2.
Figure 9 is a top rear perspective view of the flap closer of Figure 8.
Figure 10 is a top view of the flap closer of Figure 8.
Figure 11 is a bottom view of the flap closer of Figure 8.
Figure 12 is a front view of the flap closer of Figure 8.
Figure 13 is a rear view of the flap closer of Figure 8.
Figure 14 is a block diagram showing certain components of the case-handling system of Figure 2.

### Detailed Description

While the systems, devices, and methods described herein may be embodied in various forms, the drawings show and the specification describes certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connection of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as coupled, mounted, connected, etc., are not intended to be limited to direct mounting methods, but should be interpreted broadly to include indirect and operably coupled, mounted, connected, and like mounting methods. This specification is intended to be taken as a whole and interpreted in accordance with the principles of the present disclosure and as understood by one of ordinary skill in the art.

Various embodiments of the present disclosure provide a case-handling system including a minor-flap-closing device that can close the upper minor flaps of a case, a passive minor-flap-suppressing device that can maintain the closed upper minor flaps of the case in the closed positions, and a passive major-flap-closing device that can close the upper major flaps of the case. The case-handling system is configured for processing cases of substantially different dimensions as further explained below.

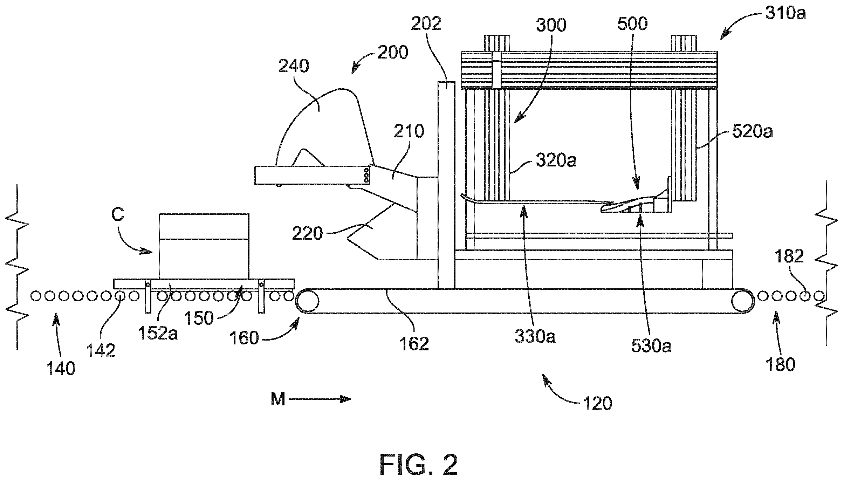

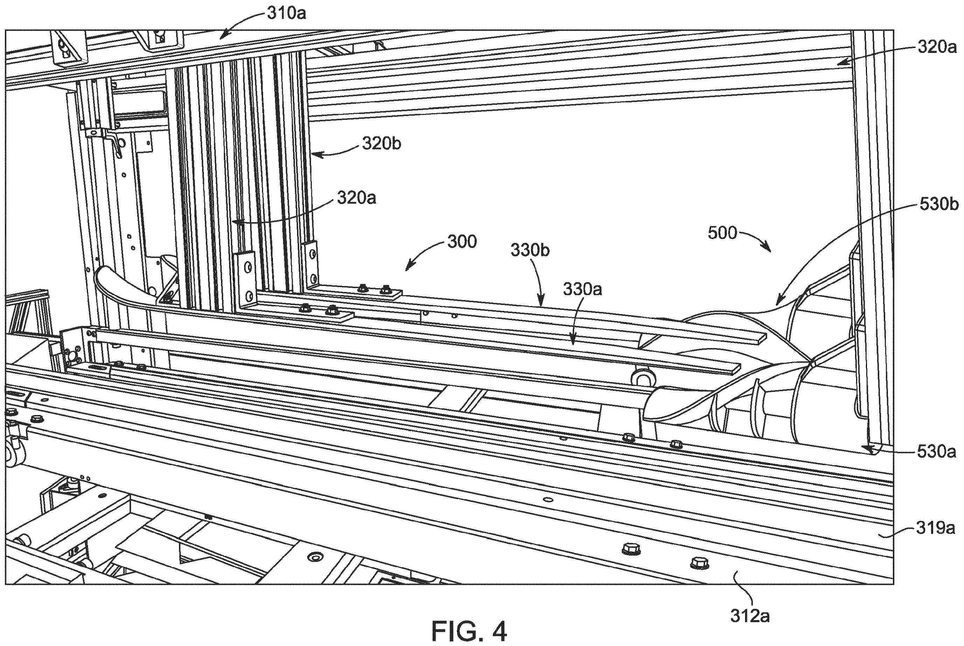

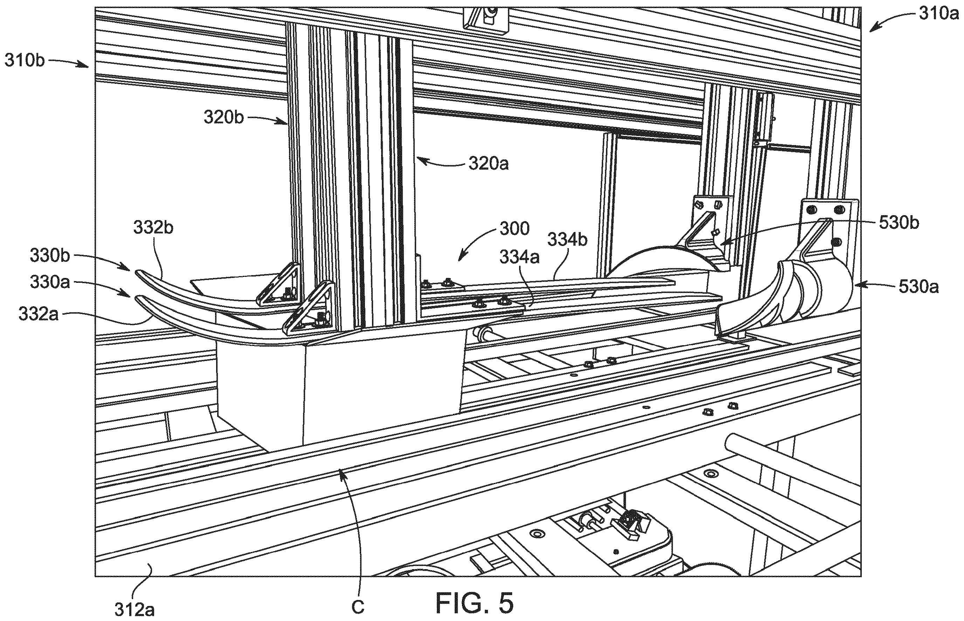

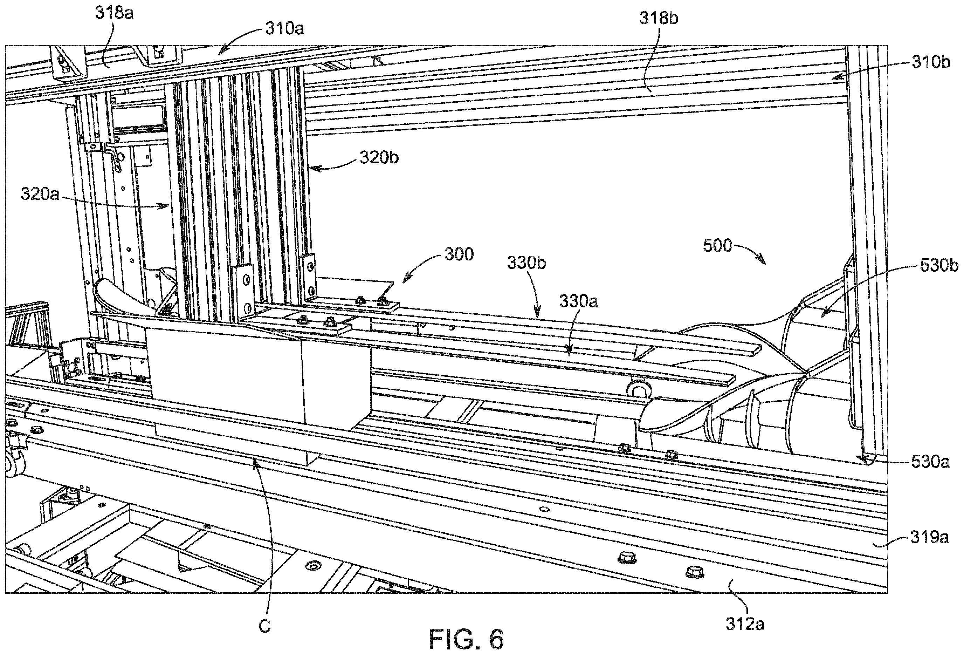

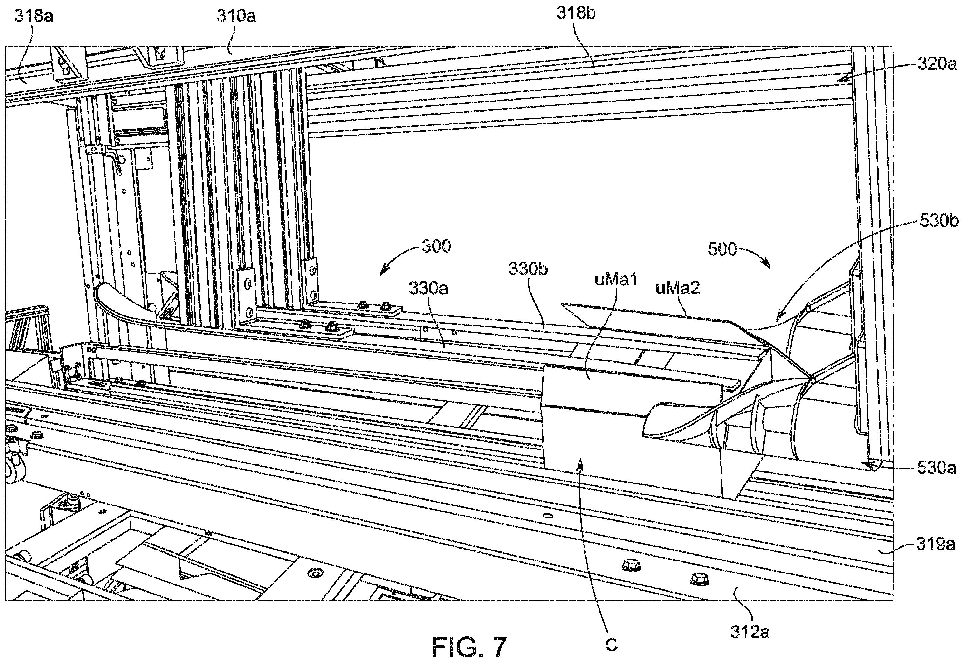

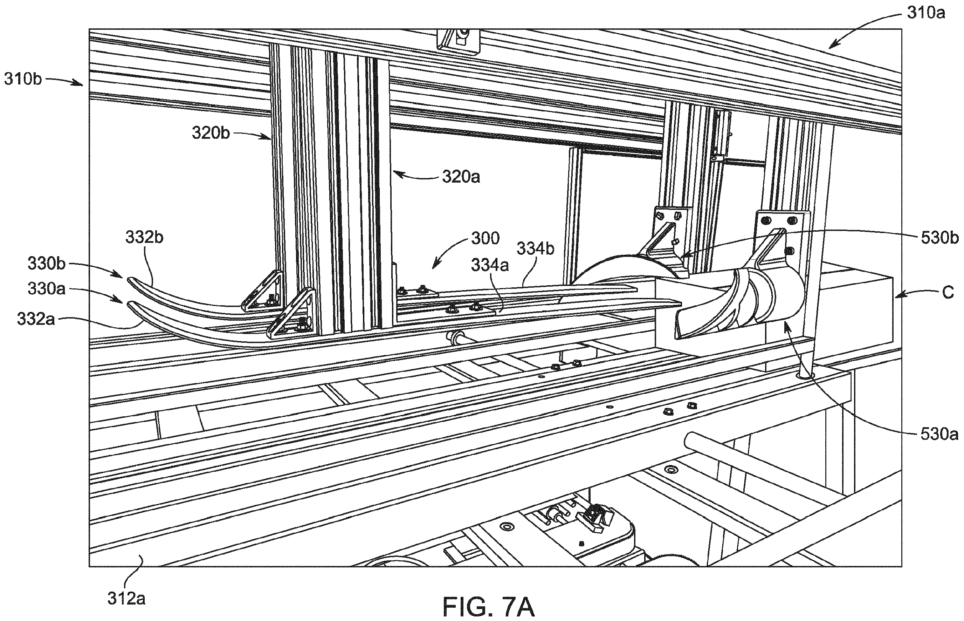

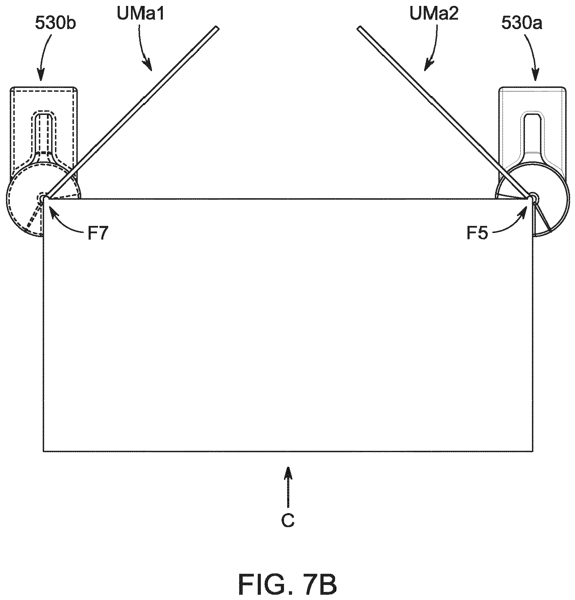

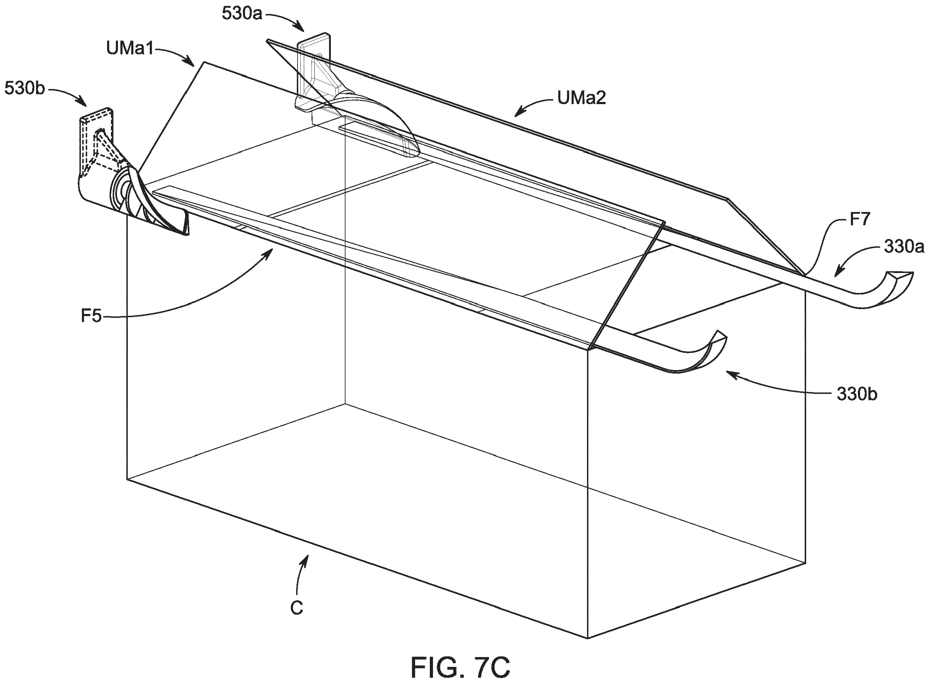

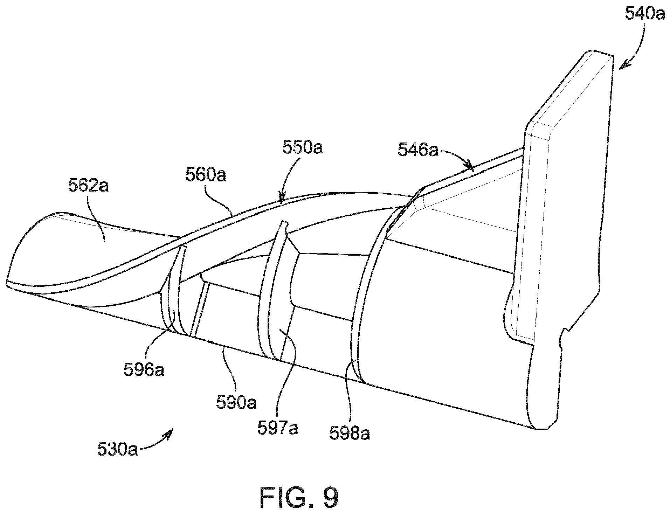

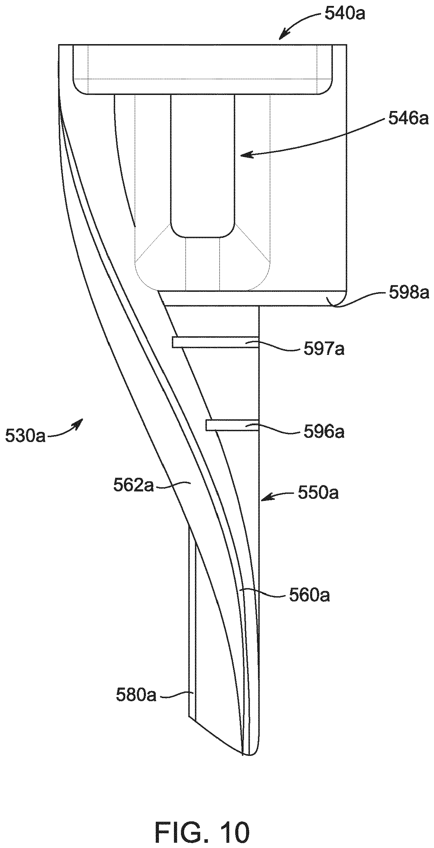

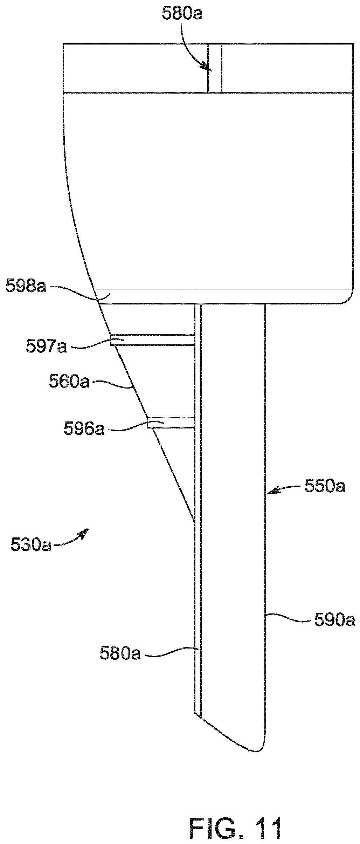

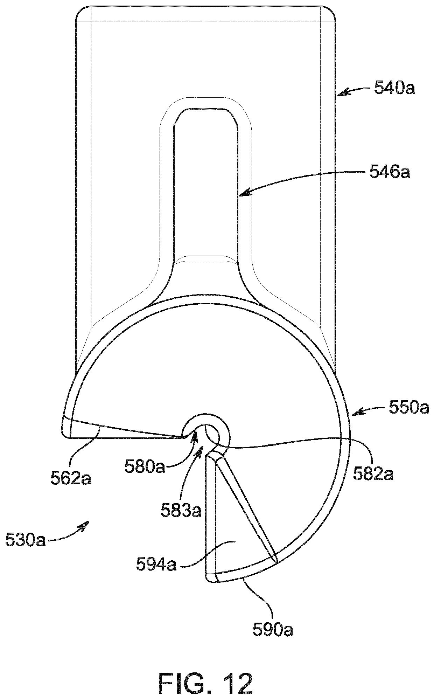

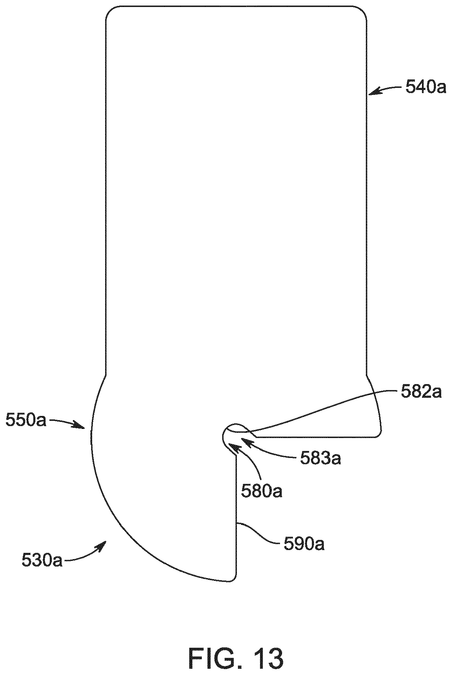

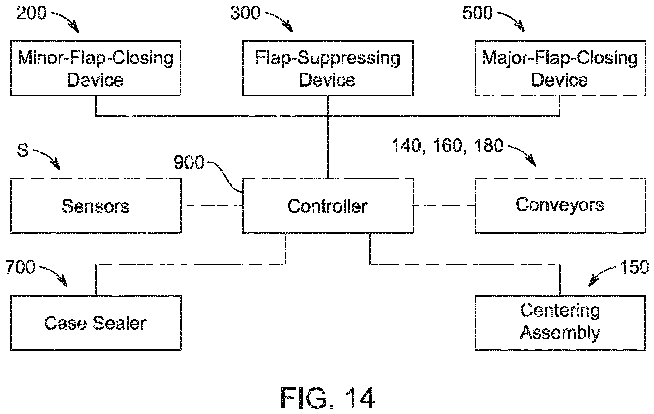

Figures 2-14 show one example embodiment of a case-handling system 120 of the present disclosure and various of the components thereof. It is noted that the features described with respect to this embodiment, particularly features described with reference to different Figures may generally also be provided independently from each other. The case-handling system 120 generally may include one or more conveyors (such as an infeed conveyor 140, a central conveyor 160, and an outfeed conveyor 180), a centering assembly 150, a minor-flap-closing device 200, a passive minor-flap-suppressing device 300, a passive major-flap-closing device 500, a case sealer (not shown), a controller 900, and/or multiple sensors S.

The conveyors 140, 160, and 180 cooperate to move cases in a movement direction M shown in Figure 2 into, though, and out of the case-handling system 120. As used herein, "downstream" means in the movement direction M, and "upstream" means opposite the movement direction M. The infeed conveyor 140 is positioned upstream of the minor-flap-closing device 200, the minor-flap-suppressing device 300, the major-flap-closing device 500, and the case sealer. The outfeed conveyor 180 is positioned downstream of the minor-flap-closing device 200, the minor-flap-suppressing device 300, the major-flap-closing device 500, and beneath the case sealer. The central conveyor 160 is positioned between the infeed and outfeed conveyors 140 and 180 and below the minor-flap-closing device 200, the minor-flap-suppressing device 300, and the major-flap-closing device 500. The infeed and outfeed conveyors 140 and 180 each include multiple rollers 142 and 182, respectively, that support the cases. The central conveyor 160 includes multiple parallel belts 162 and 164 (labeled for ease of reference but not shown) that support the cases. The rollers 142 and 182 and the belts 162 and 164 are driven in tandem or independently by one or more drive assemblies (not shown) operated under the control of the controller 900. The conveyors 140, 160, and 180 can be alternatively positioned, oriented, sized, shaped, and otherwise configured.

The infeed conveyor 140 is operable to deliver each case to a case-centering position adjacent the centering assembly 150 and upstream of the minor-flap-closing device 200. The infeed conveyor 140 is operable to move each case from that position to the central conveyor 160. The central conveyor 160 moves each case below and through the minor-flap-closing device 200, the minor-flap-suppressing device 300, and the major-flap-closing device 500 and delivers each case to the outfeed conveyor 180, at which point the minor and major flaps of each case have been closed. The outfeed conveyor 180 moves each case below and through the case sealer, which seals the case, and away from the case-handling system 120.

The conveyor(s) of the case handling system can be alternatively configured in accordance with the present disclosure. For example, the conveyor can include belts that engage the respective opposite sides of the case C (with or without squeezing pressure) to move the case C. In other examples, the conveyor can include an arm mechanism that lifts and/or moves the case C. In other examples, the conveyor can include lugs that engage the bottom trailing edge of the case C.

The centering assembly 150 is positioned upstream of the minor-flap-closing device 200 and along the infeed conveyor 140 and is operable to center each case on the infeed conveyor 140. The centering assembly 150 includes first and second centering arms 152a and 152b (numbered for ease of reference but not shown) and a centering-arm actuator (not shown). The centering arms 152a and 152b are positioned on opposite sides of the infeed conveyor 140, extend generally parallel to the movement direction M, and are movable transversely inward (relative to the movement direction M) to laterally center each case on the infeed conveyor 140. As used herein with respect to direction, "transverse" means into or out of the page from the perspective shown in Figure 2. The centering-arm actuator is operably connected to the first and second centering arms 152a and 152b (either directly or via suitable linkages) to move the centering arms 152a and 152b between: (1) a rest configuration in which the centering arms 152a and 152b are positioned at or near the lateral extents of the infeed conveyor 140 to enable a case to-be-sealed to be conveyed between the centering arms 152a and 152b; and (2) a centering configuration in which the centering arms 152a and 152b (after being moved toward one another) contact the case and center the case on the infeed conveyor 140. The controller 900 is operably connected to the centering-arm actuator to control the centering-arm actuator to move the centering arms 152a and 152b between the rest and centering configurations. The centering-arm actuator can be any suitable type of actuator, such as a motor or a pneumatic cylinder fed with pressurized gas and controlled by one or more valves. The centering assembly can alternatively be positioned, oriented, sized, shaped, and otherwise configured. In other embodiments, the case-handling system does not include such a centering assembly. In other embodiments, the case-handling system includes a centering assembly positioned downstream of the minor-flap-closing device 200 and upstream of the minor-flap-suppressing device 300.

The minor-flap-closing device 200 is operable to close the upper minor leading and trailing flaps of each case. The minor-flap-closing device 200 includes a stationary support 202 and a vertically movable support 210 coupled to the stationary support 202, a leading-minor-flap closer 220 connected to the support 210 (and vertically movable therewith), a movable trailing-minor-flap closer 240 pivotally connected to the support 210 (and vertically moveable therewith), and a trailing-minor-flap-closer actuator (not shown) operably connected to the trailing-minor-flap closer 240 and configured to pivot the trailing-minor-flap closer 240. The leading-minor-flap closer 220 extends downward from an underside of the support 210 and is positioned, shaped, oriented, and otherwise configured to engage the leading surface of the first upper minor flap UMi1 of each case C as the central conveyor 160 moves that case C into contact with the leading-minor-flap closer 220. Continued movement of that case C past the leading-minor-flap closer 220 results in the first upper minor flap UMi1 closing. The trailing-minor-flap-closer actuator is configured to pivot the trailing-minor-flap-closer 240 downwardly (under control of the controller 900) to engage and close the second upper minor flap UMi2 of that case C as the case C moves under the minor-flap-closing device 200. The trailing-minor-flap-closer actuator can be any suitable type of actuator, such as a motor or a pneumatic cylinder fed with pressurized gas and controlled by one or more valves. Although not shown, a minor-flap-closer actuator is operably connected to the minor-flap-closing device 200 (such as to the support 210) and configured to vertically move the support 210, the leading-minor-flap closer 220, and the trailing-minor-flap closer 240 of the minor-flap-closing device 200 (under control by the controller 900) to a suitable height based on the height of each case, which is determined by one or more of the sensors S and under control of the controller 900 in certain embodiments. The minor-flap-closing device 200 can be alternatively positioned, oriented, sized, shaped, and otherwise configured. In other embodiments, the minor-flap-closing device 200 does not include a leading-minor-flap closer, and in such embodiments, the minor-flap-suppressing device 300 closes the leading upper minor flap of each case.

The minor-flap-suppressing device 300 is operable to maintain the upper minor flaps of each case that have been closed by the minor-flap-closing device 200 in their respective closed positions before the upper major flaps of each case engage the major-flap-closing device 500 and at least partially while the upper major flaps of each case engage and are closed by the major-flap-closing device 500. Additionally or alternatively as mentioned above, the minor-flap-suppressing device 300 can be operable to close or complete closing of the leading upper minor flap of each case.

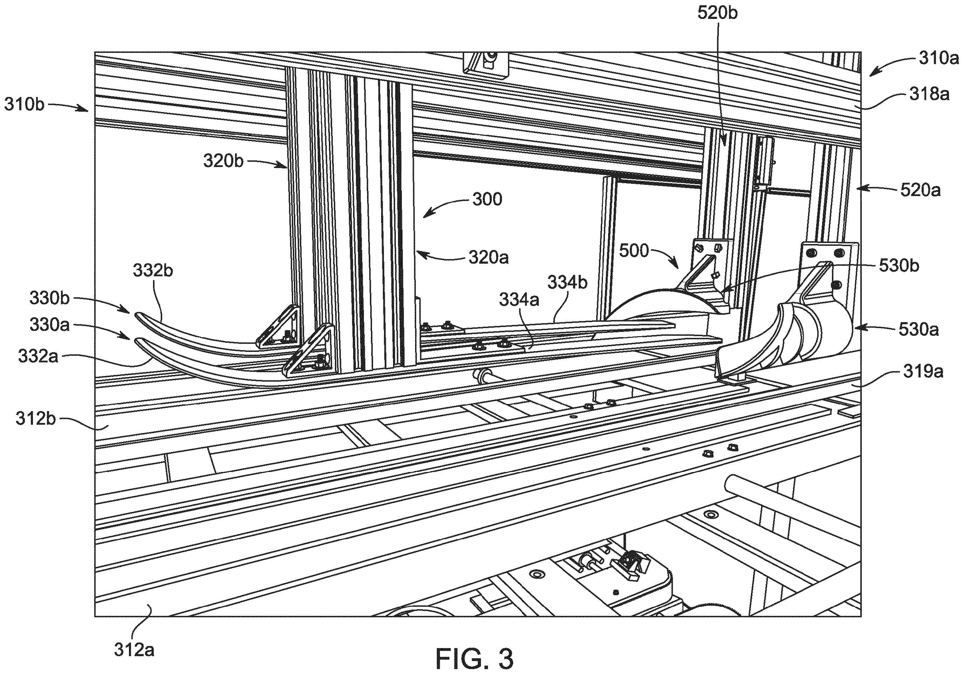

In this example illustrated embodiment, as best shown in Figures 3-7A, the minor-flap-suppressing device 300 includes: (a) a movable first carriage 310a; (b) a movable first suppressor support 320a connected to and extending downwardly from part of the first carriage 310a; (c) a first minor-flap suppressor 330a connected to the first suppressor support 320a; (d) one or more carriage-movement actuators (not shown) operably connected to the first carriage 310a and configured to move the first carriage 310a (and the first suppressor support 320a and the first minor-flap suppressor 330a connected thereto) in the transverse direction; and (e) one or more suppressor-movement actuators (not shown) operably connected to and configured to move the first suppressor support 320a and the first minor-flap suppressor 330a vertically relative to the first carriage 310a. In this embodiment, the first carriage 310a includes a first base 312a, an upright forward support 314a (labeled for ease of reference but not shown) connected to and extending upwardly from the base 312a, an upright rear support 316a (labeled for ease of reference but not shown) connected to and extending upwardly from the base 312a and spaced apart from and downstream from the forward support 314a, an upper support 318a connected to the upright forward support 314a and the upright rear support 316a, and spaced apart from the base 312a. The first carriage 310a includes a case centering bar 319a connected to the forward support 314a, the upright rear support 316a, and spaced apart from the base 312a. The carriage, supports, and case centering bar can be otherwise suitably configured in other embodiments.

In this embodiment, the first minor-flap suppressor 330a includes a longitudinally upwardly extending curved forward section 332a and a longitudinally extending, flat, horizontal rearward section 334a extending downstream of the forward section 332a. The forward section 332a and the rearward section 334a of the minor-flap suppressor 330a extend generally parallel to the movement direction M. The minor-flap-suppressing device 300 includes brackets (not labeled) that connect the first minor-flap suppressor 330a to the first suppressor support 320a. Once moved into their respective positions, the forward section 332a and the rearward section 334a are sized, shaped, oriented, and otherwise configured to engage the top surfaces of the closed upper minor flaps of a case as the case is moved under the minor-flap-suppressing device 300 to suppress such closed minor flaps and prevent them from opening.

In this example illustrated embodiment, the minor-flap-suppressing device 300 includes: (a) a moveable second carriage 310b; (b) a movable second suppressor support 320b connected to and extending downwardly from part of the second carriage 310b; (c) a second minor-flap suppressor 330b connected to the second suppressor support 320b; (d) one or more carriage-movement actuators (not shown) configured to transversely move the second carriage 310b (and the second suppressor support 320b and the second minor-flap suppressor 330b connected thereto) in a transverse direction to the movement of travel of a case through the case-handling system 120; and (e) one or more suppressor-movement actuators (not shown) configured to vertically move the second suppressor support 320b and the second minor-flap suppressor 330b relative to the second carriage 310b. In this embodiment, the second carriage 310b includes a second base 312b, an upright forward support 314b (labeled for ease of reference but not shown) connected to and extending upwardly from the base 312b, an upright rear support 316b (labeled for ease of reference but not shown) connected to and extending upwardly from the base 312b and spaced apart from and downstream from the forward support 314b, an upper support 318b connected to the upright forward support 314b and the upright rear support 316b, and spaced apart from the base 312b. The second carriage 310b includes a case centering bar 319b connected to the forward support 314b, the upright rear support 316b, and spaced apart from the base 312b. The carriage, supports, and case centering bar can be otherwise suitably configured in other embodiments.

In this embodiment, the second minor-flap suppressor 330b includes a longitudinally upwardly extending curved forward section 332b and a longitudinally extending, flat, horizontal rearward section 334b extending downstream of the forward section 332b. The forward section 332b and the rearward section 334b of the minor-flap suppressor 330b extend generally parallel to the movement direction M. The minor-flap-suppressing device 300 includes brackets (not labeled) that connect the second minor-flap suppressor 330b to the second suppressor support 320b. Once moved into their respective positions, the forward section 332b and the rearward section 334b are sized, shaped, oriented, and otherwise configured to engage the top surfaces of the closed upper minor flaps of a case as the case is moved under the minor-flap-suppressing device 300 to suppress such closed minor flaps and prevent them from opening.

The respective carriage-movement actuators of the minor-flap-suppressing device 300 are configured to, under control of the controller 900 and based on the width of each case, move the first and second carriages 310a and 310b toward and away from each other in the transverse direction such that the case handling system 120 can process cases of different widths. When the first carriage 310a moves in a transverse direction, the first suppressor support 320a connected to and extending downwardly from the support 318a of the first carriage 310a and the first minor-flap suppressor 330a connected to the first suppressor support 320a simultaneously move in that direction with the first carriage 310a. Likewise, when the second carriage 310b moves in a transverse direction, the second suppressor support 320b connected to and extending downwardly from the support 318b of the second carriage 310b and the second minor-flap suppressor 330b connected to the second suppressor support 320b simultaneously move in that direction with the second carriage 310b. Each of the carriage-movement actuators can be any suitable type of actuator, such as a motor or a pneumatic cylinder fed with pressurized gas and controlled by one or more valves.

The respective suppressor-movement actuators of the minor-flap-suppressing device 300 are configured to, under control of the controller 900 and based on the height of each case, simultaneously: (a) vertically move the first suppressor support 320a and the first minor-flap suppressor 330a connected thereto; and (b) vertically move the second suppressor support 320b and the second minor-flap suppressor 330b connected thereto, such that the case handling system 120 can process cases of different heights. Each of the suppressor-movement actuators can be any suitable type of actuator, such as a motor or a pneumatic cylinder fed with pressurized gas and controlled by one or more valves.

As also best shown in Figures 3-7, the flap-closing device 500 includes: (a) a first flap-closer support 520a connected to and extending downwardly from part of the first carriage 310a; (b) a first major-flap closer 530a connected to the first flap-closer support 520a; and (c) one or more flap-closer-movement actuators (not shown) configured to vertically move the first flap-closer support 520a and the first major-flap closer 530a relative to the first carriage 310a. In alternative embodiments where the flap-closing device 500 is not connected to the first carriage 310a (and thus not transversely movable with that first carriage 310a), the flap-closing device can include one or more additional flap-closer-movement actuators (not shown) configured to transversely move the first flap-closer support 520a and the first major-flap closer 530a. The first major-flap closer 530a is configured to passively close the upper major flap UMa1 of each case as the case is moved passed the stationary (at that point) first major-flap closer 530a. The first major-flap closer 530a is further described below.

Likewise, the flap-closing device 500 includes: (a) a second flap-closer support 520b connected to and extending downwardly from part of the second carriage 310b; (b) a second major-flap closer 530b connected to the second flap-closer support 520b; and (c) one or more flap-closer-movement actuators (not shown) configured to vertically move the second flap-closer support 520b and the second major-flap closer 530b relative to the second carriage 310b. In alternative embodiments where the flap-closing device 500 is not connected to the second carriage 310b (and thus not transversely movable with that second carriage 310b), the flap-closing device can include one or more additional flap-closer-movement actuators (not shown) configured to transversely move the second flap-closer support 520b and the second major-flap closer 530b. The second major-flap closer 530b is configured to passively close the second major flap UMa2 of each case as the case is moved passed the stationary (at that point) second major-flap closer 530b. The second major-flap closer 530b is a mirror image of the first major-flap closer 530a and is thus not described in detail herein for brevity. The first and second major-flap closers 530a and 530b are thus positionable, sized, shaped, oriented, movable, and otherwise configured to respectively simultaneously engage and close the respective upper major flaps UMa1 and UMa2 of a case as the case engages and moves between the stationary (at that point) first and second major-flap closers 530a and 530b, as further described below.

In this illustrated example embodiment as explained above, the first minor-flap suppressor 330a and the first major-flap closer 530a are connected to each other via the respective frames and/or supports. In alternative embodiments, the first minor-flap suppressor 330a and the first major-flap closer 530a are not connected to each other and are independently movable via suitable supports and actuators separately operably connected to such components to vertically and transversely move such components. Likewise, in this illustrated example embodiment as explained above, the second minor-flap suppressor 330b and the second major-flap closer 530b are connected to each other via the respective frames and/or supports. In alternative embodiments, the second minor-flap suppressor 330b and the second major-flap closer 530b are not connected to each other and are independently movable via suitable supports and actuators separately operably connected to such components to vertically and transversely move such components. Therefore, the present disclosure is not limited to having these components connected.

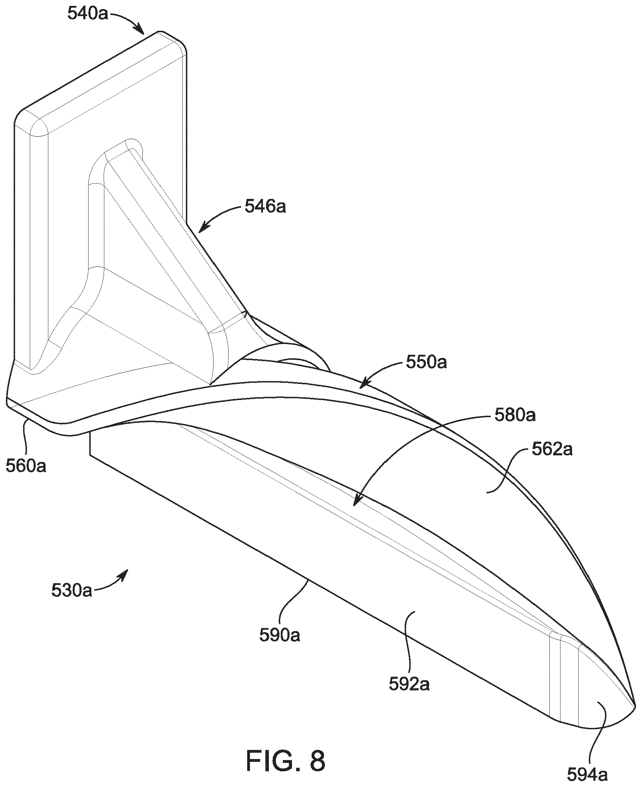

As best shown in Figures 8-13, the first flap closer 530a includes a rear support 540a connectable to the flap-closer support 520a, a flap-closing arm 550a extending from the rear support 540a, and a reinforcement bracket 546a connected to and connecting the rear support 540a and the flap-closing arm 550a. The first flap closer 530a is vertically and transversely movable with the first carriage 310a and the first flap-closer support 520a, but is otherwise stationary (such as not additionally rotatable) in this embodiment. The first flap closer 530a is sized, shaped, positionable, and otherwise configured as described below to engage or be engaged by the upper major flap UMa1 of a case and to cause that flap to rotate to the closed positioned as the case moves in contact with and past the first flap closer 530a. The flap-closing arm 550a facilitates this rotation.

More specifically, the flap-closing arm 550a includes a first end (not labeled) connected to the rear support 540a and a second free end (not labeled) spaced apart from the rear support 540a in the downstream direction from the rear support 540a. The flap-closing arm 550a includes a flap-closing wall 560a having a first end (not labeled) connected to the rear support 540a and a second free end (not labeled) spaced apart from the rear support 540a in the upstream direction from the rear support 540a. The flap-closing wall 560a has a partial helix shape and defines a flap-closing surface 562a configured to be engaged by the outer surface of the upper major flap UMa1 of a case and to close that upper major flap UMa1 of the case as the case moves pass and engages the first flap closer 530a.

The flap-closing arm 550a also includes a case-engaging wall 590a having a first end (not labeled) connected to the rear support 540a and a second free end (not labeled) spaced apart from the rear support 540a in the downstream direction from the rear support 540a. The case-engaging wall 590a has a generally straight section having an inner surface 592a and a free-end-outwardly-extending section having an inner surface 594a (for inwardly directing the case if necessary). The inner surface 592a is configured to engage or be engaged by the side SW1 of a case below the upper major flap UMa1 of the case as the case moves pass the first flap closer 530a.

The flap-closing arm 550a includes a case-edge receiver 580a positioned between the case-engaging wall 590a and flap-closing arm 550a, and specifically above the case-engaging wall 590a and below the flap-closing arm 550a. The case-edge receiver 580a has a first end (not labeled) connected to the rear support 540a and a second free end (not labeled) spaced apart from the rear support 540a in the downstream direction from the rear support 540a. The case-edge receiver 580a has a partially cylindrical inner surface 582a that defines a case-edge receiving channel 583a. The case-edge receiver 580a is configured such that the upper edge of the case between the side wall SW1 and the upper major flap UMa1 such as along fold line F5 of the case has room to move through the case-edge receiving channel 583a as the case engages and moves past the first flap closer 530a and as the first flap closer 530a closes the upper major flap UMa1.

In this embodiment, the first flap closer 530a is rigid and inflexible, and can be formed from any suitable rigid material or component(s), such as metal or an inflexible polymer. In this embodiment, the flap-closing arm 550a also includes transversely extending support members 596a, 597a, and 598a that provide structural support for the flap-closing arm 550a and the entire first flap closer 530a. These structural supports can vary in accordance with the present disclosure.

In this example embodiment, the major-flap-closing device 500 is connected to and thus moves vertically and transversely with the minor-flap-suppressing device 300. In alternative embodiments, the major-flap-closing device 500 is not connected to the minor-flap-suppressing device 300 and is thus independently movable from the minor-flap-suppressing device 300.

As can be seen in Figures 2-7C, the downstream ends of the flap suppressors 330a and 330b extend between and longitudinally overlap with the upstream ends of the flap-closing arms 550a and 550b. This enables the minor-flap-suppressing device 200 to maintain the upper minor flaps of the case in the closed positions while the flap-closing device 500 closes the upper major flaps. This overlap prevents the leading upper minor flap UMi2 of the case C from moving upwardly and interfering with the closing of the first and second upper major flaps UMa1 and UMa2 of the case C while the first and second flap closers 530a and 530b of the flap-closing device 500 are closing those upper major flaps.

The case sealer (not shown) includes a tape applicator (not shown) that includes a tape cartridge (not shown) supporting a roll of tape (not shown). The tape applicator is configured to apply tape from the roll to the closed upper major flaps UMa1 and UMa2 and minor side walls of the case as the outfeed conveyor 180 moves the case C beneath and past the tape cartridge. The case sealer can be downstream of the flap-suppressing and major-flap-closing devices or can be integrated into the major-flap-closing device 500.

The controller 900 controls, communicates with, and operates with the components of the case-handling system 120, including various actuators, drive assemblies, and sensors referenced above. The controller 900 is operably connected to and configured to control each of the actuators described herein. The controller 900 is thus configured to control movement and operation of the conveyors 140, 160, and 180, the centering assembly 150, the minor-flap-closing device 200, the minor-flap-suppressing device 300, the major-flap-closing device 500, and the case sealer. The controller 900 can be any suitable type of controller (such as a programmable logic controller) that includes any suitable processing device(s) (such as a microprocessor, a microcontroller-based platform, an integrated circuit, or an application-specific integrated circuit) and any suitable memory device(s) (such as random-access memory, read-only memory, or flash memory). The memory device(s) stores instructions executable by the processing device(s) to control operation of the case-handling system 120. In various alternative embodiments, the case handling system 120 can include more than one controllers where such controllers control different components or functions of the case handling system 120 such as but not limited having different controller controlling different actuators of the case handling system 120.

Generally, in operation, the case-handling system 120 receives cases that are filled with product (and in some instances, dunnage) and that have their upper major and minor flaps open and is configured to: (1) center the case via the centering assembly 150; (2) close the upper minor flaps via the minor-flap-closing device 200; (3) suppress the closed upper minor flaps via the minor-flap-suppressing device 300; (4) close the upper major flaps via the major-flap-closing device 500; and (5) apply tape to the closed upper major flaps via the case sealer to seal the case shut in preparation for shipping.

More specifically, the controller 900 controls the infeed conveyor 140 to move a case C toward the minor-flap-closing device 200. The case C triggers one of the sensors S (which can be a photo-eye in this example embodiment) when it reaches a position between the centering arms 152a and 152b of the centering assembly 150. This causes the controller 900 to: stop the infeed conveyor 140 and move the centering arms 152a and 152b transversely inwardly to center the case C on the infeed conveyor 140. After the centering arms 152a and 152b center the case C, the controller 900 controls the infeed conveyor 140 to continue moving the case C toward the minor-flap-closing device 200.

While the case C is at least partially on the infeed conveyor 140, the controller 900 determines a minor-flap-closing position based on the size (such as a determined height) of the case C and controls the minor-flap-closing device 200 to vertically move (if necessary) to that minor-flap folding position in preparation for folding the upper minor flaps UMa1 and UMa2 of the case C. In other words, the controller 900 vertically positions the minor-flap-closing device 200 such that the minor-flap-closing device 200 will properly engage the upper minor flaps UMa1 and UMa2 of that particular case C the case-handling system 120 is processing. The controller 900 can determine the size of each case C (such as a determined height, a determined width, and/or a determined length) of the case C in any suitable manner, such as based on feedback from one or more of the sensors S or from an input received from an operator or another component of the packaging line. In various embodiments, the controller 900 receives the minor-flap-closing position from another component of the packaging line. The controller 900 controls the central conveyor 160 to move the case C into contact with the leading-minor-flap closer 220. Continued movement of the case C causes the leading-minor-flap closer 220 to close the leading upper minor flap UMi1 of the case C, and the controller 900 then controls trailing-minor-flap closer 240 to pivot to engage and close the trailing upper minor flap UMi2 of the case C.

Before the case C reaches the minor-flap-suppressing device 300, the controller 900 determines the transverse positions for the carriages 310a and 310b based on a determined width of the case C and determines the vertical positions of: (a) the first and second suppressor supports 320a and 320b and/or the first and second minor-flap suppressors 330a and 330b; and (b) the first and second flap-closer supports 520a and 520b and/or the first and second major-flap closers 530a and 530b, based on the determined height of the case C. As indicated above, the controller 900 can determine the size of the case C (such as the determined height and the determined width of the case C) in any suitable manner, such as based on feedback from one or more of the sensors S or from an input received from an operator or another component of the packaging line.

The first and second minor-flap suppressors 330a and 330b are transversely positionable such that they extend between the open upper major flaps UMa1 and UMa2 of the case C. In certain embodiments, the first and second minor-flap suppressors 330a and 330b are transversely positioned such that the distance between their respective outer side edges (not labeled) is less than, but relatively close to, the determined width of the case C less the thickness of the material of the upper major flaps UMa1 and UMa2. In such positions, the first and second minor-flap suppressors 330a and 330b are just inside the fold lines F5 and F7 of the case C, which also enables them to act as folding guides as well as suppressors.

The first and second minor-flap suppressors 330a and 330b are vertically positionable such that the undersides or bottom surfaces (not labeled) of the first and second minor-flap suppressors 330a and 330b can engage and suppress the upper minor flaps UMi1 and UMi2 of the case C. More specifically, in certain embodiments, the first and second minor-flap suppressors 330a and 330b are vertically positioned just higher than the height of the walls EW1, EW2, SW1, and SW2 of the case C. This enables the first and second minor-flap suppressors 330a and 330b to hold the upper minor flaps UMi1 and UMi2 down in the closed positions and to eliminate any "tenting" potentially caused by the lower major flaps of the case C not being fully closed.

The first and second major-flap closers 530a and 530b are transversely and vertically positionable such that the case-edge receiving channels 583a and 583b thereof are longitudinally aligned in the direction of movement M of the case C with the fold lines F5 and F7 of the case C and such that the respective edges of the case that form the fold lines F5 and F7 can extend into the respective case-edge receiving channels 583a and 583b as the case C moves by and between the first and second major-flap closers 530a and 530b. In these positions, the flap-closing arms 550a and 550b and specifically the flap-closing walls 560a and 560b will engage or will be engaged by the respective outer surfaces of the open upper major flaps UMa1 and UMa2 of the case C as the case is moved between and by the first and second major-flap closers 530a and 530b such that the flap-closing arms 550a and 550b passively cause the open upper major flaps UMa1 and UMa2 of the case C to each rotate inwardly about the respective fold lines F5 and F7 into closed positions.

Specifically, the curved or helical flap-closing surfaces 562a and 562b are configured to passively engage or be engaged by the outer surfaces of the upper major flaps UMa1 and UMa2 of the case C such that these engagements cause the inward rotations of the upper major flaps UMa1 and UMa2 of the case C as those outer surfaces of the upper major flaps UMa1 and UMa2 of the case C continue to move or be forced inwardly relative to the helical flap-closing surfaces 562a and 562b of the flap-closing arms 550a and 550b based on those inwardly curved surfaces.

The controller 900 causes: (a) the carriages movement actuators to move (if necessary) the carriages 310a and 310b to the respective determined transverse positions; (b) the suppressor-movement actuators to move (if necessary) the first and second suppressor supports 320a and 320b of the minor-flap-suppressing device 300 to the determined vertical positions; and (c) the flap-closer-movement actuators to move (if necessary) the first and second flap-closer supports 520a and 520b of the minor-flap-suppressing device 300 to the determined vertical positions, in preparation for holding the upper minor flaps UMi1 and UMi2 of the case C in their respective closed positions and causing the inward folding of the upper major flaps UMa1 and UMa2 of the case C into their respective closed positions.

The controller 900 controls the central conveyor 160 to move the case C into contact with and beneath the minor-flap-suppressing device 300 and to and between the first and second major-flap closers 530a and 530b of the flap-closing device 500. The minor-flap-suppressing device 300 engages the upper minor flaps UMi1 and UMi2 of the case C and holds them closed while the first and second major-flap closers 530a and 530b of the flap-closing device 500 cause the upper major flaps UMa1 and UMa2 of the case C to rotate inwardly and close as the case C moves between and past the first and second major-flap closers 530a and 530b .

The controller 900 controls the outfeed conveyor 180 to move the case C beneath the case sealer, which seals the case C, and then away from the case-handling system 120.

## Claims

1. A case-handling system comprising:
a conveyor;
a vertically movable longitudinally extending first flap-suppressor; and
a controller configured to cause the first flap-suppressor to vertically move to a first position to engage and hold upper minor flaps of a case in closed positions as the conveyor moves the case under the first flap-suppressor, wherein the first position is determined by the controller based on a height of the case.

2. The case-handling system of claim 1, wherein the first position is also determined by the controller based on a width of the case.

3. The case-handling system of claim 1 or 2, which comprises a vertically movable longitudinally extending second flap-suppressor, and wherein the controller is configured to cause the second flap-suppressor to vertically move to a second position to engage and hold the upper minor flaps of the case in the closed positions as the conveyor moves the case under the second flap-suppressor, wherein the second position is determined by the controller based on the height of the case.

4. The case-handling system of claim 3, wherein the first and second positions are also determined by the controller based on a width of the case.

5. The case-handling system of any of claims 3 or 4, wherein the first and second positions are at a same vertical height and are transversely spaced apart.

6. The case-handling system of any of claims 1-5, wherein the first flap-suppressor is transversely movable, and wherein the controller is configured to cause the first flap-suppressor to transversely move to the first position, wherein the first position is determined by the controller based on a width of the case.

7. The case-handling system of any of claims 1-6, which comprises a first flap-closer vertically movable relative to the conveyor, and wherein the controller is configured to cause the first flap-closer to vertically move to a third position to engage a first upper major flap of the case as the conveyor moves the case relative to the first flap-closer, wherein the third position is determined by the controller based on the height of the case.

8. The case-handling system of claim 7, wherein the third position is also determined by the controller based on a width of the case.

9. The case-handling system of claim 7 or 8, wherein the first flap-closer is shaped to passively close the first upper major flap of the case as the case moves past and engages the first flap-closer.

10. The case-handling system of any of claims 7-9, wherein the first flap-closer has a helical flap-closing surface configured to be engaged by an outer surface of the first upper major flap of the case as the case moves past the first flap-closer.

11. The case-handling system of any of claims 7-10, wherein the first flap-closer defines a case-edge receiving channel configured to receive an upper edge of the case between a first side wall and the upper major flap of the case as the upper major flap engages the first flap-closer and moves past the first flap-closer.

12. The case-handling system of any of claims 1-11, which comprises a second flap-closer vertically movable relative to the conveyor, and wherein the controller is configured to cause the second flap-closer to vertically move to a fourth position to engage a second upper major flap of the case as the conveyor moves the case relative to the second flap-closer, wherein the fourth position is determined by the controller based on the height of the case.

13. The case-handling system of claim 12 referred back to any of claims 7-11, wherein the third and fourth positions are also determined by the controller based on a width of the case.

14. The case-handling system of any of claims 7-13, wherein the first flap-closer defines a case-edge receiving channel configured to receive an upper edge of the case between a first side wall and the upper major flap of the case as the upper major flap engages the first flap-closer and moves past the first flap closer, or wherein a downstream end of the first flap-suppressor extends transversely adjacent to an upstream end of the first flap-closer.

15. The case-handling system of any of claims 1-14, wherein the first minor-flap suppressor comprises an upwardly extending angled forward section and a flat rearward section extending downstream from the forward section.
